# EUROPÄISCHE PATENTSCHRIFT

(11) **EP 1 767 907 B1**
(45) Veröffentlichungstag und Bekanntmachung des Hinweises auf die Patenterteilung: **22.10.2014**
(21) Anmeldenummer: 06019513.8
(22) Anmeldetag: 19.09.2006
(51) Int. Cl.: G01F 1/115

(54) **Durchflusssensor**
Flow rate sensor
Débitmètre

(30) Priorität: 27.09.2005 DE 102005045995
(43) Veröffentlichungstag der Anmeldung: 28.03.2007
(73) Patentinhaber: Hydrotechnik GmbH, 65549 Limburg a. d. Lahn (DE)
(72) Erfinder: Molden, Claus, Dipl.-Ing., 65553 Limburg-Dietkirchen (DE)
(74) Vertreter: Müller, Eckhard

(56) Entgegenhaltungen:
- DE-A1- 4 105 283
- DE-A1- 10 111 147
- DE-C1- 19 820 989
- US-A- 4 893 228
- US-A1- 2003 169 024
- US-A1- 2005 242 792
- "Voltage regulator" WIKIPEDIA, [Online] XP002549668 Gefunden im Internet: URL:http://en.wikipedia.org/w/index.php?ti tle=Voltage_regulator&diff=23992700&oldid= 23116314> [gefunden am 2005-09-25]

## Beschreibung

Die vorliegende Erfindung betrifft einen Durchflusssensor, der eine von einem Fluid durchströmbare Messkammer aufweist, in welcher ein durch die Strömung des Fluids in Rotation versetzbares Drehelement gelagert ist. Dabei wird zur Bestimmung des Durchflussvolumens des Fluids die Rotation bzw. Rotationsgeschwindigkeit des Drehelements mittels einer dem Drehelement zugeordneten Messeinheit sensorisch erfasst, welche zur Erzeugung eines der Frequenz eines oszillierenden Sensorsignals zugeordneten, zur Einspeisung in ein Netzwerk vorgesehenen Messwertes ausgebildet ist.

### Hintergrund und Stand der Technik

Durchflussmessgeräte oder Volumenzähler sind in einer Vielzahl unterschiedlicher Bauformen, wie beispielsweise als Ovalrad- oder Flügelradzähler, Bi-Rotorzähler oder Ringkolbenzähler bekannt, die alle auf einem grundlegenden gemeinsamen Funktionsprinzip beruhen. Bei solch vorbekannten Durchflusssensoren ist innerhalb einer von einem Fluid durchströmbaren Messkammer zumindest ein Rotor angeordnet, der durch die Strömung des Fluids in Rotation versetzt wird. Hierbei ist die Rotationsgeschwindigkeit des Rotors ein Maß für das die Messkammer durchströmende Fluid-Volumen. Zur Bestimmung des Durchflussvolumens ist es daher erforderlich, dass die Drehbewegung des Rotors sensorisch erfasst und ausgewertet wird.

So beschreibt beispielsweise die DE 33 00 657 A1 einen Ovalradzähler, bei dem jeweils eine Stirnseite mit einem Permanentmagneten bestückt ist und bei dem eine Magnetfeldsensor-Anordnung oberhalb der Ovalradstirnseiten vorgesehen ist. Die Frequenz des vom Magnetfeldsensor erzeugbaren Signals ist hierbei direkt proportional zur Rotationsgeschwindigkeit des durch die Fluidströmung in Rotation versetzten Rotors.

Da die zu ermittelnde Messgröße in Form der Frequenz des Ausgangssignals eines Sensors vorliegt, sind zur Datenauswertung und letztlich zur Bestimmung des Durchflussvolumens frequenzsignalverarbeitende Geräte erforderlich, die insbesondere gegen Fremdeinwirkungen, wie beispielsweise Störfrequenzen, zu schützen sind. Dies erfordert die Implementierung aufwändiger Filtertechniken, was sich nachteilig auf Herstellungskosten auswirkt und mitunter die Störanfälligkeit des Messgeräts erhöht.

Zudem sind solche Frequenzsignale, die als Grundlage zur Berechnung des Volumendurchflusses dienen nur bedingt zur Weiterverarbeitung geeignet. Gängige Signal- oder Datenübertragungssysteme, wie zum Beispiel elektrische Netzwerke und/oder Bussysteme erlauben keine direkte Einspeisung eines Frequenzsignals, sondern erfordern die Anpassung von Messsignalen in ein vorgegebenes Daten- oder Signalübertragungsprotokoll.

Ein Durchflusssensor der hier angesprochenen Art ist aus der DE 41 05 283 A1 bereits bekannt. Der Durchflusssensor weist dort ein durch eine Fluidströmung in Rotation versetzbares Drehelement auf, dem zur sensorischen Erfassung seiner Rotation ein Aufnehmer eines Moduls zugeordnet ist. Die von dem Aufnehmer erfasste Drehbewegung wird mittels eines Wandlers in elektrische Signale umgewandelt und einer Signalaufbereitungsschaltung sowie eine Auswerteschaltung des Moduls zugeführt. Der bekannte Durchflusssensor weist ferner ein Netzteil auf, welches die Spannungsversorgung der Auswerteschaltung übernimmt, wenn die mittels dem Wandler und der Signalaufbreitungsschaltung generierte Versorgungsspannung nicht ausreicht. Ferner ist es bei dem bekannten Durchflusssensor auch möglich, die Stromversorgung des Moduls über eine Schnittstelle zu realisieren, welche an einem Feldbus angeschlossen werden kann.

Ein ähnlicher Durchflusssensor ist aus der DE 101 11 147 A1 bekannt. Dort ist in einem Gasstrom ein Gaszähler eingekoppelt, dem zur sensorischen Erfassung seiner Rotation eine Volumenerfassungseinrichtung mit Mengenumwerter zugeordnet ist. Die von dem Impulsgeber der Volumenerfassungseinrichtung gelieferten Impulse werden dabei auf einen Zählchip übertragen, welcher keine eigene Spannungsversorgung aufweist. Eine externe Spannungsversorgung ist lediglich für die durch den Mengenumwerter erforderliche Signal- und Datenverarbeitung sowie die Datenübertragung vorgesehen.

In Bezug auf die Bereitstellung einer Versorgungsspannung ist beispielsweise aus dem Artikel "Voltage Regulator" WIKIPEDIA, XP 002549668, veröffentlicht im Internet unter URL:http://en.wikipedia.org/w/index.php?title=Voltage_regulato r&diff=23992700&oldid=23116314>, bekannt einen Schaltregler und einen Linearregel in Reihe zu schalten. Auch aus US 4,893,228 A, US 2003/169,024 A1, US 2005/242,792 A1, und DE 198 20 989 C1 sind ganz allgemein solche Linearschaltungen bekannt.

Aus DE 101 11 147 A1 ist ein Gaszähler mit einem neuartigen Zählchip bekannt, der ohne jede zusätzliche Energieversorgung allein aus den Zählimpulsen gespeist ein Zählergebnis erzeugt.

### Aufgabenstellung

Der vorliegenden Erfindung liegt die Aufgabe zugrunde, einen Durchflusssensor der eingangs genannten Art bereitzustellen, welcher mit unterschiedlichen zur Verfügung gestellten DC-Versorgungsspannungen betreibbar ist und Störeinflüsse auf das Sensorsignal vermieden sind.

### Erfindung und vorteilhafte Wirkungen

Die der Erfindung zugrunde liegende Aufgabe wird mittels einer Vorrichtung zur Durchflussmessung gemäß Patentanspruch 1 und einer Messeinheit gemäß Patentanspruch 13 gelöst. Weitere vorteilhafte Ausgestaltungen der Erfindungen sind in den Unteransprüchen angegeben.

Erfindungsgemäß sind zur DC-Spannungsversorgung der Messeinheit zumindest ein Schaltregler und ein dazu in Reihe geschalteter Linearregler vorgesehen.

Durch diese Maßnahme ist eine Anpassung zur Verfügung gestellter DC-Versorgungsspannungen an die erforderliche DC-Versorgungsspannung der Messeinheit ermöglicht. Dabei ist eine hinreichend konstante und störanteilsfreie DC-Spannungsversorgung gewährleistet.

Zur Vermeidung etwaiger vom Schaltregler ausgehender Störeinflüsse auf die Messeinheit ist vorgesehen, dass die Schaltfrequenz des Schaltreglers im Wesentlichen außerhalb der Bandbreite des vom Sensor erzeugbaren Sensorsignals liegt. Auf diese Art und Weise kann ein etwaiger störender Einfluss des Schaltreglers auf die Messeinheit effektiv minimiert werden. Dies ist insbesondere dahingehend von Bedeutung, da die vom Sensor an die Auswerteeinheit übermittelten oszillierenden Signale typischerweise im Millivoltbereich liegen und von daher recht störanfällig sind.

Die Vorrichtung zur Durchflussmessung von Fluiden verfügt ferner über eine von einem Fluid durchströmbare Messkammer, in der ein durch die Fluidströmung in Rotation versetzbares Drehelement oder ein entsprechender Strömungskörper drehbar gelagert ist. Die Rotation des Drehelements wird hierbei mittels eines Sensors einer Messeinheit sensorisch erfasst. Der vorzugsweise ortsfest angeordnete Sensor ist hierbei dem Drehelement zugeordnet und ist bei rotierendem Drehelement zur Erzeugung eines oszillierenden Sensorsignals ausgebildet, welches von der Messeinheit zur Bestimmung der Rotationsgeschwindigkeit des Drehelements und letztlich zur Bestimmung des Durchflussvolumens der Messkammer ausgewertet werden kann.

Die Messeinheit ist hierbei zur Erzeugung eines der Frequenz des Sensorsignals zugeordneten Messwertes ausgebildet, der zur Einspeisung in ein Netzwerk oder zur Datenübertragung vorgesehen bzw. dazu ausgebildet ist.

Das vom Sensor erzeugbare oszillierende Sensorsignal, dessen Frequenz ein Maß für die Rotationsgeschwindigkeit des Drehelements ist, wird somit direkt vom Durchflusssensor bzw. von der Messeinheit in einen Messwert umgesetzt, dessen Betrag oder Größe ein direktes Indiz für die Frequenz des Sensorsignals bzw. für die Rotationsgeschwindigkeit des Drehelements ist.

Die mittels des Sensors ursprünglich in Form einer Frequenz erfasste Messgröße, wird somit direkt und lokal vom Durchflusssensor, bzw. von der Messeinheit in eine universell weiter zu verarbeitende und nahezu beliebig übermittelbare Messgröße umgewandelt.

Durch diese lokale Umsetzung eines der Rotationsgeschwindigkeit des Drehelements entsprechenden Sensorsignals in einen Messwert wird die Störanfälligkeit des der Durchflussmessvorrichtung insbesondere hinsichtlich externer Störeinflüsse in vorteilhafter Weise verbessert. Auf die Implementierung aufwändiger Filtertechniken bspw. zur Filterung und Abschirmung von Störfrequenzen kann daher in kosteneinsparender Weise verzichtet werden.

Dies ist insbesondere dahingehend von Vorteil, da die vom Sensor übermittelten Signale zumeist nur eine relativ geringe Signalstärke aufweisen und somit per se besonders störanfällig sind.

Das in der Messkammer drehbar angeordnete Drehelement kann in unterschiedlichsten Varianten, beispielsweise als Flügelrad, Ovalrad, Zahnrad oder dergleichen ausgebildet sein. Der dem Drehelement zugeordnete, vorzugsweise ortsfest angeordnete Sensor basiert typischerweise auf dem Induktionsprinzip, wobei das Drehelement über mindestens ein exzentrisch zur Drehachse angeordnetes magnetisches bzw. ferromagnetisches Element verfügt, welches während der Rotationsbewegung des Drehelements im Bereich des Sensors eine zeitliche Änderung eines Magnetfeldes bewirkt, die über eine Induktion im Sensor ermittelt werden kann und somit Aufschluss über die Drehbewegung des Drehelements geben kann.

Nach einer ersten vorteilhaften Ausgestaltung der Erfindung weist die Messeinheit eine Auswerteeinheit auf, die zur Erzeugung des Messwerts auf der Basis des oszillierenden Sensorsignals ausgebildet ist. Die Auswerteeinheit kann hierbei mittels integrierter elektronischer Schaltkreise realisiert werden, die typischerweise eine Versorgungsspannungen im Bereich einiger Volt (DC) erfordern.

Nach einer weiteren bevorzugten Ausführungsform der Erfindung erfolgt die DC-Spannungsversorgung der Messeinheit und somit ihrer Auswerteeinheit direkt über das Netzwerk, in welches der zu ermittelnde Messwert einzuspeisen ist. Dies hat den Vorteil, dass das Netzwerk oder das Datenübertragungssystem eine Doppelfunktion, nämliche eine Datenübertragung einerseits und eine Stromversorgung andererseits übernimmt. Auf diese Art und Weise kann der schaltungstechnische Aufwand zur Realisierung eines eine Vielzahl von Durchflusssensoren umfassenden Messsystems in vorteilhafter Weise minimiert werden.

Gängige Netzwerke oder Datenübertragungssystem, insbesondere Bus Systeme, wie z.B. der Control Area Network (CAN)- oder CANOpen Bus sind für eine Spannungsversorgung für solche an den Bus anzuschließende Geräte im Bereich von einigen 10 Volt, typischerweise von 8 V - 30 V DC ausgelegt. Da die Mess- bzw. Auswerteeinheit des Durchflusssensors eine davon abweichende Spannungsversorgung, vorzugsweise im Bereich um 5 Volt erfordert, muss eine Anpassung bezüglich der Spannungsversorgung, z.B. mit Hilfe eines Spannungsreglers erfolgen.

Mittels des Linearreglers als Spannungsregler könnte eine solche Anpassung der vom Netzwerk zur Verfügung gestellten Versorgungsspannung an die Mess- bzw. Auswerteeinheit grundsätzlich erfolgen. Hierbei stellt sich jedoch das Problem, dass im Linearregler beträchtliche Verlustleistungen bis hin zu einigen Watt auftreten können, die ein Erhitzen der Messeinheit und damit einhergehende Funktionsstörungen bewirken können, oder wahlweise den nachteiligen Einsatz Raum einnehmender Kühlelemente erfordern.

Durch den Schaltregler oder durch einen DC/DC-Wandler wird ebenfalls eine Spannungswandlung ermöglicht, und zwar mittels getakteter Schalter und induktiver und/oder kapazitiver Energiespeicher. Allerdings weist das Ausgangssignal eines Schaltregler typischerweise störende AC-Komponenten auf, die sich negativ auf die Messwertbestimmung bzw. Sensorsignalverarbeitung in der Messeinheit auswirken können. Insofern sind durch die Kombination des Schaltreglers mit dem in Reihe geschalteten Linearregler die jeweiligen Nachteile eine Schaltreglers und eines Linearreglers kompensiert. Es ist auf diese Weise die DC-Spannungsversorgung der Messeinheit und/oder der Auswerteeinheit möglich.

Nach einer weiteren Ausgestaltung ist vorgesehen, dass zur DC-Spannungsversorgung die Auswerteeinheit an den Ausgang des Linearreglers angeschlossen ist, wobei dessen Eingang wiederum mit dem Ausgang des Schaltreglers verbunden ist. Die zur Verfügung stehende Versorgungsspannung wird somit zunächst mittels des Schaltreglers transformiert und anschließend mit Hilfe des Linearreglers auf die jeweilige vorgegebene DC-Versorgungsspannung der Messeinheit und/oder der Auswerteeinheit angepasst.

Vorzugsweise sind der Schaltregler und der Linearregler derart aufeinander abgestimmt, dass die Schaltfrequenz des Schaltreglers möglichst weit vom dem vom Sensor erzeugbaren und von der Auswerteeinheit genutzten Frequenzband liegt. Der Sensor als auch die Auswerteeinheit sind hierbei typischerweise für eine Frequenzbandbreite von zumindest bis zu 10 kHz ausgelegt, während die Schaltfrequenz des Schaltreglers im Bereich oberhalb von 10 kHz, vorzugsweise oberhalb von 100 kHz liegt.

Nach einer weiteren bevorzugten Ausführungsform der Erfindung weist die Auswerteeinheit einen Wandler zum Umwandeln der vom Sensor erzeugten oszillierenden Signale in ein Rechtecksignal im Wesentlichen gleicher Frequenz auf. Dieser Wandler erfüllt hierbei typischerweise die Funktion eines Vorverstärkers und wandelt das vom Sensor erzeugte, mitunter sinusförmige Sensorsignal in ein entsprechendes Rechtecksignal um, welches gegenüber dem vom Sensor erzeugten zumeist sinusförmigen Signal besser zur Frequenzbestimmung geeignet ist.

Nach einer weiteren vorteilhaften Ausgestaltung weist die Auswerteeinheit zumindest eine über das Netzwerk ansteuerbare und/oder konfigurierbare Prozessoreinheit auf. Die Auswerteeinheit ist somit prozessorgesteuert und kann je nach Programmierung an unterschiedlichste Ausgestaltungen des Durchflusssensors variabel und individuell angepasst werden. Die Ansteuerbarkeit über das Netzwerk ermöglicht insbesondere eine Fernabfrage der vom Durchflusssensor ermittelten Signale, die über das Netzwerk einer zentralen Prozessoreinheit zugeführt werden können.

Zudem kann durch den Einsatz einer solchen Prozessoreinheit, beispielsweise in Form eines Mikrocontrollers, die Funktionalität des Durchflusssensors oder seiner Auswerteeinheit bzw. seiner Messeinheit über das Netzwerk abgefragt werden. Auf eine zeitaufwändige und kostenintensive manuelle Inspektion oder Funktionsüberprüfung der Durchflussmessvorrichtung bzw. des Durchflusssensors kann daher in vorteilhafter Weise verzichtet werden.

Nach einer weiteren Ausführungsform ist die Prozessoreinheit auf der Basis des vom Wandler erzeugbaren Rechtecksignals zur Bestimmung des in das Netzwerk einspeisbaren Messwertes ausgebildet. Insoweit stellt die, vorzugsweise als Micro-Controller ausgebildete Prozessoreinheit eine für die Bestimmung des Messwertes zentrale Komponente der Auswerteeinheit dar. Die auf- und/oder absteigenden Flanken des vom Wandler in die Prozessoreinheit eingespeisten Rechtecksignals werden dort detektiert und zur Bestimmung der Frequenz des Signals herangezogen.

Weiterhin ist vorgesehen, dass die Messeinheit und/oder deren Auswerteeinheit an den jeweiligen Sensor und/oder an das jeweilige, in der Messkammer angeordnete Drehelement individuell anpassbar sind. Eine Kalibrierung der Mess- oder Auswerteeinheit an einen speziellen Typ von Sensor bzw. Drehelement kann somit rein elektronisch, vorzugsweise sogar über das Netzwerk, erfolgen.

Nach einer weiteren vorteilhaften Ausgestaltung ist bzw. sind die Auswerteeinheit und/oder die Prozessoreinheit mittels einer Zuordnungstabelle an unterschiedliche Sensoren kalibrierbar oder anpassbar. Die Zuordnungstabelle ist hierbei vorzugsweise in Form elektronischer Zuordnungsdaten entweder direkt in der Mess- oder Auswerteeinheit oder aber mittels eines externen, möglicherweise nichtflüchtigen Speichers gespeichert.

Die Implementierung einer solchen software- oder hardwarebasierten Kalibrierfunktion ermöglicht insbesondere die Realisierung eines modularen Konzepts, wonach eine Messeinheit beispielsweise an unterschiedliche Messkammern mit unterschiedlichen Drehelementen universell ankoppelbar ist. Die erforderliche Kalibrierung an den jeweiligen Messkammertyp kann dann mittels der abgespeicherten oder vom Benutzer zur Verfügung gestellten Zuordnungstabelle nahezu selbsttätig erfolgen.

Von Vorteil ist weiterhin, dass die Prozessoreinheit ausgehend von den in der Zuordnungstabelle gespeicherten Daten mittels Interpolation zur Bestimmung von Messwerten ausgebildet ist. So gibt die Zuordnungstabelle beispielsweise einen Zusammenhang zwischen der Rotationsfrequenz des Drehelements und des damit korrespondierenden Volumenstroms wieder. Typischerweise sind die hierbei diskrete Frequenz- bzw. Volumenstromwerte abgespeichert. Mittels der Interpolationsfunktion der Prozessoreinheit kann schließlich zu jeder Eingangsfrequenz anhand in der Tabelle benachbart abgespeicherter Werte ein entsprechend interpolierter, bzw. genäherter Volumenstrom berechnet werden.

Nach einer weiteren Ausführungsform der Erfindung sind der Schaltregler und/oder der Linearregler in die Auswerteeinheit oder in die Messeinheit integriert, wodurch sowohl der Platzbedarf des Durchflusssensors bzw. der Messeinheit als auch deren Herstellungskosten bzw. Produktionsaufwand insgesamt reduziert werden können.

Nach einer weiteren vorteilhaften Ausführungsform der Erfindung ist das Netzwerk, in welches die von der Messeinheit erzeugbaren Amplitudensignale einzuspeisen sind, in Form eines asynchronen seriellen Bussystems, beispielsweise in Form eines Control Area Network (CAN) oder Ethernet ausgebildet. Eine derartige Anpassung des Durchflusssensors an gängige Kommunikationsnetzwerke oder Bussysteme ermöglicht eine vielfältige Verwendung des Durchflusssensors innerhalb einer bereits bestehenden Bus- oder Netzinfrastruktur.

### Ausführungsbeispiel

Weitere Ziele, Merkmale und vorteilhafte Anwendungsmöglichkeiten der Erfindung ergeben sich anhand der nachfolgenden Beschreibung eines Ausführungsbeispiels. Dabei bilden alle beschriebenen und/oder bildlich dargestellten Merkmale in beliebiger sinnvoller Kombination den Gegenstand der vorliegenden Erfindung, auch unabhängig von ihrer Zusammenfassung in den Patentansprüchen oder deren Rückbeziehung.

### Es zeigen:

- Figur 1: eine schematische Querschnittsdarstellung des Durchflusssensors,
- Figur 2: ein Blockdiagramm der Messeinheit mit Netzwerkanbindung und
- Figur 3: ein Diagramm der Ausgangsspannung der Spannungsregler.

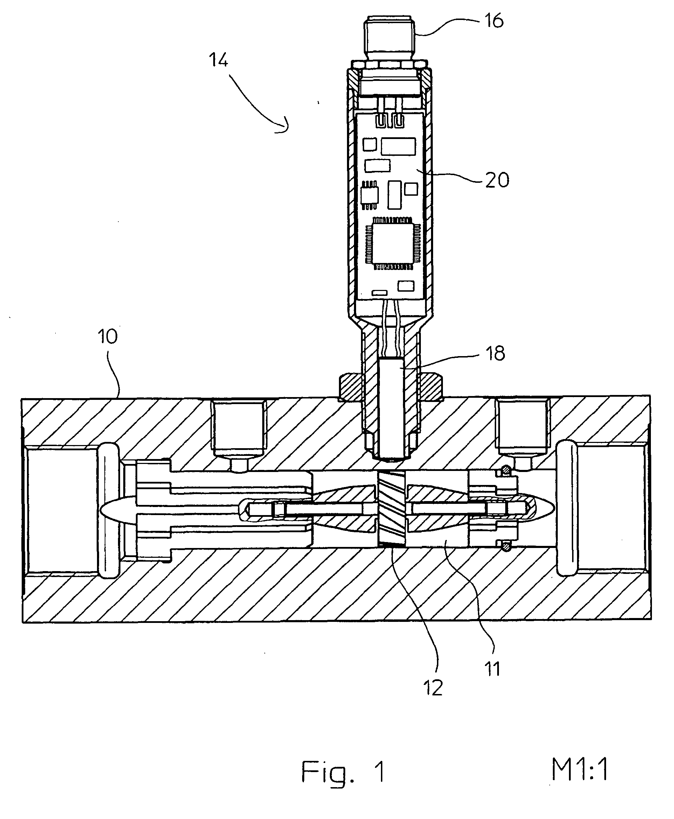

Figur 1 zeigt eine Querschnittsdarstellung des Durchflusssensors zur Durchflussmessung eines Fluids innerhalb eines rohrartigen Körpers oder Messturbine 10. Innerhalb dieser Turbine 10 ist eine Messkammer 11 vorgesehen, in welcher das drehbar gelagerte Drehelement 12 beispielsweise in Form eines Flügel- oder Zahnrads durch die Fluidströmung in Rotation versetzt werden kann.

Dem Drehelement 12 ist ein Sensor 18 einer Messeinheit 14 zugeordnet, der bei Rotation des Drehelements 12 zur Erzeugung und/oder Abgabe von oszillierenden Sensorsignalen ausgebildet ist. Diese Signale weisen typischerweise einen sinusartigen Verlauf mit einer Frequenz auf, die der Rotationsgeschwindigkeit des Drehelements zugeordnet werden kann. Ausgehend von dieser Frequenz lässt sich schließlich das Durchflussvolumen des Fluids durch die Messkammer 11 bestimmen.

Die Messeinheit 14 ist hierzu zur Umwandlung des vom Sensor 18 erzeugbaren oszillierenden Sensorsignals in einen Messwert ausgebildet, der über einen Anschluss 16 einem Messwert- oder Datenübertragungssystem, wie zum Beispiel einem Netzwerk oder einem Datenbus zugeführt werden kann. Die Umwandlung des oszillierenden Signals in einen konkreten Messwert hat hierbei den Vorteil, dass eine Adaption des Durchflusssensors an eine bestehende Netzwerk- oder Busarchitektur mit vorgegebenem Datenübertragungsprotokoll erfolgen kann.

Durch die Umwandlung des oszillierenden Signals des Sensors in einen Messwert wird zudem der Einfluss etwaiger Störfrequenzen auf das zu messende Signal auf ein Minimum reduziert. Die Weiterverarbeitung des Messsignals wird somit in kostengünstiger Weise vereinfacht.

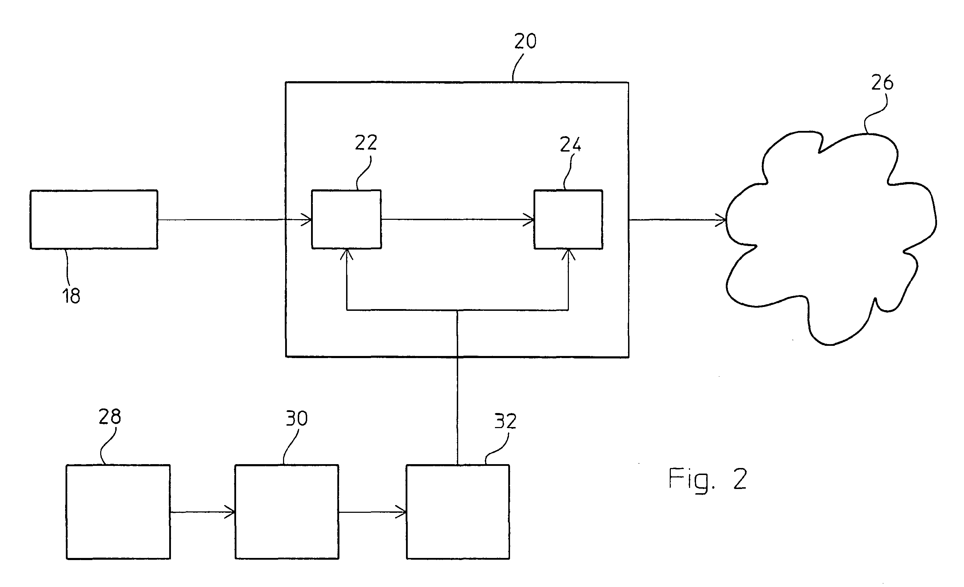

Figur 2 zeigt eine schematische Darstellung einzelner Komponenten des Durchflusssensors bzw. seiner Messeinheit 14 in Form eines Blockdiagramms. Die Messeinheit 14 besteht hierbei im Wesentlichen aus dem Sensor 18, dessen Signale von der Auswerteeinheit 20 weiterverarbeitet werden. Die Auswerteeinheit 20 verfügt über einen Wandler 22 und eine Prozessoreinheit 24.

Beide Komponenten, Wandler 22 und Prozessoreinheit 24 sind vorzugsweise in Form integrierter Schaltkreise bzw. in Form von separaten oder einer einzigen integrierten Prozessoreinheit ausgebildet.

Das vom Sensor 18 erzeugbare oszillierende Signal wird dem Wandler 22 der Auswerteeinheit 20 zugeführt, der aus dem üblicherweise sinusförmigen Signal des Sensors 18 ein Rechtecksignal mit entsprechender Frequenz erzeugt. Dieses Rechtecksignal wird der Prozessoreinheit 24 zugeführt, die das vom Wandler 22 zur Verfügung gestellte Signal in einen der Frequenz des Signals entsprechenden Messwert umwandelt.

Der Messwert liegt hiernach vorzugsweise in Form eines digitalisierten Signals vor und wird schließlich über den Sensoranschluss 16 einem Netzwerk oder einem Bussystem 26 zugeführt. Dieses Ausgangssignal der Prozessoreinheit 24 ist somit charakteristisch für die Frequenz des Sensorsignals. Es ist von daher ein Maß für die Rotationsgeschwindigkeit des Drehelements 12 und folglich auch ein Maß für das Durchflussvolumen des durch die Messkammer 11 fließenden Fluids.

Der von der Prozessoreinheit 24 erzeugbare Messwert kann zudem an ein durch die Architektur des Netzwerks oder des Bussystems 26 vorgegebenes Datenübertragungsprotokoll angepasst werden. Zudem kann die Prozessoreinheit 24 nicht nur Signale zum Netzwerk 26 senden, sondern auch Steuerbefehle über das Netzwerk 26 empfangen, die zur Steuerung und/oder zur Konfiguration des Durchflusssensors bzw. der Auswerteeinheit beliebig Verwendung finden können.

Zur Einbindung in eine bestehende Netzwerk- oder Busstruktur muss die Messeinheit 14 für unterschiedliche und variable vom Netzwerk 26 oder dem Datenbus zur Verfügung gestellte DC-Versorgungsspannungen ausgelegt werden. Typische von Bussystemen, wie z.B. dem CAN Bus zur Verfügung gestellte Versorgungsspannungen liegen im Bereich von 8 V bis 30 V. Da die Auswerteeinheit 20 und/oder der Sensor 18 zumeist für eine geringere DC-Versorgungsspannung, typischerweise im Bereich um 5 Volt ausgelegt sind, muss hier eine DC-Wandlung der Versorgungsspannung erfolgen. Diese kann in vorteilhafter Weise mittels einer Serienschaltung von Schaltregler 30 und Linearregler 32 realisiert werden.

Die von der Spannungsversorgung 28 des Netzwerks 26 zur Verfügung gestellte elektrische Leistung wird zunächst dem Schaltregler 30 zugeführt, dessen Ausgang mit dem Eingang des Linearreglers 32 verbunden ist. Am Ausgang des Linearreglers 32 wird dann die für den Betrieb der Auswerteeinheit 20 erforderliche DC-Versorgungsspannung abgegriffen.

Durch die Verwendung zweier in Reihe geschalteter Spannungsregler 30, 32 werden die jeweiligen Nachteile eines Schaltreglers 30 und eines Linearreglers 32 kompensiert. Die alleinige Verwendung eines Linearreglers 32 würde zwar die für die Auswerteeinheit 20 erforderliche DC-Versorgungsspannung liefern, allerdings wäre dann die Verlustleistung des Linearreglers 32 so groß, dass zusätzliche Kühlelemente erforderlich werden. Dies ist für die bestimmungsgemäße Verwendung im Durchflusssensor aufgrund der geforderten Bauteilabmessungen jedoch nachteilig.

Durch eine alleinige Verwendung eines Schaltreglers 30 als Spannungsregler für die Auswerteeinheit 20 würden durch die im Schaltregler 30 getakteten Schaltelemente unweigerlich Störfrequenzen erzeugt werden, die die Auswertung der mitunter recht schwachen Messsignale des Sensors 18 negativ oder doch zumindest störend beeinflussen.

Durch die anhand der Figur 2 dargestellte Reihenschaltung von Schaltregler 30 und Linearregler 32 werden diese jeweiligen Nachteile vermieden. Insbesondere wird die Taktung des Schaltreglers 30 in einem Frequenzbereich betrieben, der außerhalb der Bandbreite des vom Sensor 18 erzeugbaren Signals liegt. Vorzugsweise sind der Schaltregler 30 und der Linearregler 32 derart aufeinander abgestimmt, dass die Störeinflüsse des Schaltreglers 30 auf das Messsignal vernachlässigbar gering sind.

Eine alleinige Verwendung eines Schaltreglers 30 zur DC-Spannungsversorgung der Auswerteeinheit 20 hätte zudem den Nachteil, dass das DC-Versorgungsspannungssignal nicht ausreichend konstant ist. Durch die nachgeschaltete Implementierung des Linearreglers 32 wird somit der AC-Anteil des Ausgangssignal des Schaltreglers derart geglättet, so dass eine für den Betrieb der Auswerteeinheit 20 erforderliche, hinreichend konstante DC-Spannungsversorgung gewährleistet werden kann.

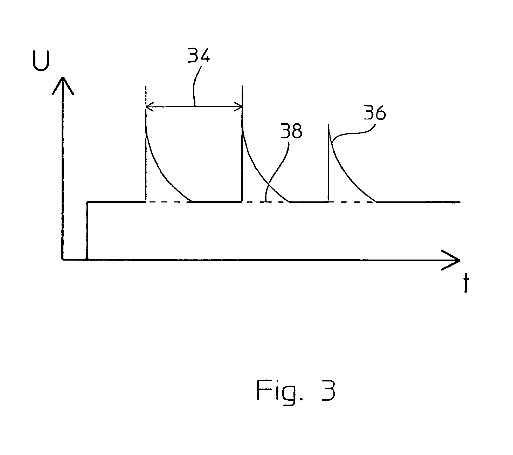

Die unterschiedlichen Ausgangssignale eines Schalt- bzw. Linearreglers sind anhand des in Figur 3 gezeigten Diagramms dargestellt. Hierin werden typische Ausgangsspannungen 36 eines Schaltreglers und die Ausgangsspannung 38 eines Linearreglers über der Zeit dargestellt. Während das Ausgangssignal 36 des Schaltreglers 30 in Abstand einer Taktweite 34 einen AC-Anteil in Form einzelner Spannungsspitzen aufweist, die insbesondere für den Betrieb der Auswerteeinheit 20 nachteilig sind, verläuft die Ausgangsspannung 38 des nachgeschalteten Linearreglers 32 nahezu konstant.

Die Reihenschaltung von Schaltregler 30 und Linearregler 32 gewährleistet somit eine ausreichend stabile Spannungsversorgung der Auswerteeinheit 20 und/oder des Sensors. Das Anbringen etwaiger Kühlkörper am Linearregler 32 ist aufgrund einer verminderten Leistungsaufnahme des Linearreglers 32 ebenso wenig erforderlich wie eine Implementierung aufwändiger Frequenzfilter zur Abschirmung der Messeinheit 20 vor etwaigen durch den Schaltregler 30 hervorgerufenen Störfrequenzen.

### Bezugszeichenliste

- 10: Messturbine
- 11: Messkammer
- 12: Drehelement
- 14: Messeinheit
- 16: Anschluss
- 18: Sensor
- 20: Auswerteeinheit
- 22: Wandler
- 24: Prozessoreinheit
- 26: Netzwerk/Bussystem
- 28: Spannungsversorgung
- 30: Schaltregler
- 32: Linearregler
- 34: Taktweite
- 36: Signal
- 38: Signal

## Patentansprüche

1. Vorrichtung zur Durchflussmessung von Fluiden mit einer von dem Fluid durchströmbaren Messkammer (11), in der ein durch die Fluidströmung in Rotation versetzbares Drehelement (12) gelagert ist, dem zur sensorischen Erfassung seiner Rotation ein Sensor (18) einer Messeinheit (14) zugeordnet ist, welche zur Erzeugung eines der Frequenz eines oszillierenden Sensorsignals zugeordneten, zur Einspeisung in ein Netzwerk (26) vorgesehenen Messwertes ausgebildet ist, **dadurch gekennzeichnet, dass** zur DC-Spannungsversorgung der Messeinheit (14) zumindest ein Schaltregler (30) und ein dazu in Reihe geschalteter Linearregler (32) vorgesehen sind, wobei die Schaltfrequenz des Schaltreglers (30) im Wesentlichen außerhalb der Bandbreite der Frequenz des vom Sensor (18) erzeugbaren Sensorsignals liegt.

2. Vorrichtung nach Anspruch 1, **dadurch gekennzeichnet, dass** zur DC-Spannungsversorgung die Messeinheit (14) an den Ausgang des Linearreglers (32) angeschlossen ist, dessen Eingang mit dem Ausgang des Schaltreglers (30) verbunden ist.

3. Vorrichtung nach Anspruch 1 oder 2, **dadurch gekennzeichnet, dass** die DC-Spannungsversorgung der Messeinheit (14) über das Netzwerk (26) erfolgt.

4. Vorrichtung nach einem oder mehreren der vorhergehenden Ansprüche, **dadurch gekennzeichnet, dass** die Messeinheit (14) zur Umwandlung des oszillierenden Sensorsignals in den Messwert eine Auswerteeinheit (20) aufweist.

5. Vorrichtung nach Anspruch 4, **dadurch gekennzeichnet, dass** die Auswerteeinheit (20) einen Wandler (22) zum Umwandeln des vom Sensor (18) erzeugbaren oszillierenden Sensorsignals in ein Rechtecksignal gleicher Frequenz aufweist.

6. Vorrichtung nach einem der Ansprüche 4 oder 5, **dadurch gekennzeichnet, dass** die Auswerteeinheit (20) zumindest eine über das Netzwerk (26) ansteuerbare und/oder konfigurierbare Prozessoreinheit (24) aufweist.

7. Vorrichtung nach Anspruch 6, **dadurch gekennzeichnet, dass** die Prozessoreinheit (24) auf der Basis des vom Wandler erzeugbaren Rechtecksignals zur Bestimmung des in das Netzwerk (26) einzuspeisenden Messwertes ausgebildet ist.

8. Vorrichtung nach einem oder mehreren der vorhergehenden Ansprüche 1 bis 7, **dadurch gekennzeichnet, dass** die Messeinheit (14) und/oder die Auswerteeinheit (20) an den jeweiligen Sensor (18) und/oder das jeweilige Drehelement (12) anpassbar sind.

9. Vorrichtung nach einem oder mehreren der Ansprüche 6 bis 8, **dadurch gekennzeichnet, dass** die Messeinheit (14) und/oder die Auswerteeinheit (20) und/oder die Prozessoreinheit (24) mittels einer Zuordnungstabelle an unterschiedliche Sensoren (18) kalibrierbar oder anpassbar sind.

10. Vorrichtung nach Anspruch 9, **dadurch gekennzeichnet, dass** die Prozessoreinheit (24) ausgehend von in der Zuordnungstabelle gespeicherten Daten zur Bestimmung von Messwerten mittels Interpolation ausgebildet ist.

11. Vorrichtung nach einem oder mehreren der Ansprüche 1 bis 10, **dadurch gekennzeichnet, dass** der Schaltregler (30) und/oder der Linearregler (32) in die Auswerteeinheit (20) oder in die Messeinheit (14) integriert sind.

12. Vorrichtung nach einem oder mehreren der vorhergehenden Ansprüche, **dadurch gekennzeichnet, dass** das Netzwerk in Form eines asynchronen seriellen Bussystems, bspw. in Form eines Control Area Network (CAN) oder Ethernet, ausgebildet ist.

## Claims

1. Apparatus for measuring the flow rate of fluids, having a measuring chamber (11) through which the fluid can flow and in which a rotating element (12) is mounted, which rotating element can be caused to rotate by the fluid flow and, for the purpose of recording its rotation by means of sensors, is assigned a sensor (18) of a measuring unit (14) which is designed to generate a measured value which is assigned to the frequency of an oscillating sensor signal and is intended to be fed into a network (26), **characterized in that** at least one switching controller (30) and a linear controller (32) connected in series with the latter are provided for the purpose of supplying the measuring unit (14) with DC voltage, the switching frequency of the switching controller (30) being substantially outside the bandwidth of the frequency of the sensor signal which can be generated by the sensor (18).

2. Apparatus according to Claim 1, **characterized in that**, in order to be supplied with DC voltage, the measuring unit (14) is connected to the output of the linear controller (32), the input of which is connected to the output of the switching controller (30).

3. Apparatus according to Claim 1 or 2, **characterized in that** the measuring unit (14) is supplied with DC voltage via the network (26).

4. Apparatus according to one or more of the preceding claims, **characterized in that** the measuring unit (14) has an evaluation unit (20) for converting the oscillating sensor signal into the measured value.

5. Apparatus according to Claim 4, **characterized in that** the evaluation unit (20) has a converter (22) for converting the oscillating sensor signal which can be generated by the sensor (18) into a square-wave signal at the same frequency.

6. Apparatus according to either of Claims 4 and 5, **characterized in that** the evaluation unit (20) has at least one processor unit (24) which can be controlled and/or configured via the network (26).

7. Apparatus according to Claim 6, **characterized in that** the processor unit (24) is designed to determine the measured value to be fed into the network (26) on the basis of the square-wave signal which can be generated by the converter.

8. Apparatus according to one or more of the preceding Claims 1 to 7, **characterized in that** the measuring unit (14) and/or the evaluation unit (20) can be adapted to the respective sensor (18) and/or the respective rotating element (12).

9. Apparatus according to one or more of Claims 6 to 8, **characterized in that** the measuring unit (14) and/or the evaluation unit (20) and/or the processor unit (24) can be calibrated or adapted to different sensors (18) using an allocation table.

10. Apparatus according to Claim 9, **characterized in that** the processor unit (24) is designed to determine measured values by means of interpolation proceeding from data stored in the allocation table.

11. Apparatus according to one or more of Claims 1 to 10, **characterized in that** the switching controller (30) and/or the linear controller (32) is/are integrated in the evaluation unit (20) or in the measuring unit (14).

12. Apparatus according to one or more of the preceding claims, **characterized in that** the network is in the form of an asynchronous serial bus system, for example in the form of a Control Area Network (CAN) or Ethernet.

## Revendications

1. Dispositif de mesure de débit de fluides, présentant une chambre de mesure (11) qui peut être traversée par le fluide et dans laquelle est monté un élément rotatif (12) qui peut être mis en rotation par l'écoulement de fluide et auquel un capteur (18) d'une unité de mesure (14) qui est configurée pour former une valeur de mesure associée à la fréquence d'un signal oscillant du capteur pour l'injecter dans un réseau (26) est associé pour saisir sa rotation,
**caractérisé en ce que**
au moins un régulateur de commutation (30) et un régulateur linéaire (32) raccordé en série par rapport au premier sont prévus pour l'alimentation en tension continue de l'unité de mesure (14) et
**en ce que** la fréquence de commutation du régulateur de commutation (30) est située essentiellement à l'extérieur de la bande de fréquence du signal que peut former le capteur (18).

2. Dispositif selon la revendication 1, **caractérisé en ce que** pour l'alimentation en tension continue, l'unité de mesure (14) est raccordée à la sortie du régulateur linéaire (32) dont l'entrée est raccordée à la sortie du régulateur de commutation (30).

3. Dispositif selon les revendications 1 ou 2, **caractérisé en ce que** l'alimentation en tension continue de l'unité de mesure (14) s'effectue par l'intermédiaire du réseau (26).

4. Dispositif selon l'une ou plusieurs des revendications précédentes, **caractérisé en ce que** l'unité de mesure (14) présente une unité d'évaluation (20) qui convertit le signal oscillant du capteur en la valeur de mesure.

5. Dispositif selon la revendication 4, **caractérisé en ce que** l'unité d'évaluation (20) présente un convertisseur (22) qui convertit le signal oscillant que peut former le capteur (18) en un signal rectangulaire de même fréquence.

6. Dispositif selon l'une des revendications 4 ou 5, **caractérisé en ce que** l'unité d'évaluation (20) présente au moins une unité de processeur (24) qui peut être commandée et/ou configurée par l'intermédiaire du réseau (26).

7. Dispositif selon la revendication 6, **caractérisé en ce que** l'unité de processeur (24) est configurée pour déterminer la valeur de mesure qui peut être injectée dans le réseau (26) sur la base du signal rectangulaire qui peut être formé par le convertisseur.

8. Dispositif selon l'une ou plusieurs des revendications 1 à 7 qui précèdent, **caractérisé en ce que** l'unité de mesure (14) et/ou l'unité d'évaluation (20) peuvent être adaptées au capteur (18) particulier et/ou à l'élément rotatif (12) particulier.

9. Dispositif selon l'une ou plusieurs des revendications 6 à 8, **caractérisé en ce que** l'unité de mesure (14), l'unité d'évaluation (20) et/ou l'unité de processeur (24) peuvent être étalonnées par rapport à différents capteurs (18) au moyen d'un tableau d'association.

10. Dispositif selon la revendication 9, **caractérisé en ce que** l'unité de processeur (24) est configurée pour déterminer les valeurs de mesure par interpolation à partir de données conservées dans le tableau d'association.

11. Dispositif selon l'une ou plusieurs des revendications 1 à 10, **caractérisé en ce que** le régulateur de commutation (30) et/ou le régulateur linéaire (32) sont intégrés dans l'unité d'évaluation (20) ou dans l'unité de mesure (14).

12. Dispositif selon l'une ou plusieurs des revendications précédentes, **caractérisé en ce que** le réseau est configuré sous la forme d'un système de bus série asynchrone, par exemple sous la forme d'un réseau de contrôle de zone ("Control Area Network" - CAN) ou d'un Ethernet.
